# EUROPÄISCHE PATENTSCHRIFT

(11) **EP 0 715 060 B1**
(45) Veröffentlichungstag und Bekanntmachung des Hinweises auf die Patenterteilung: **09.09.1998**
(21) Anmeldenummer: 95110592.3
(22) Anmeldetag: 07.07.1995
(51) Int. Cl.: F01M 11/03, B01D 29/15

(54) **Flüssigkeitsfilter**
Liquid filter
Epurificateur liquide

(30) Priorität: 29.11.1994 DE 9419087 U
(43) Veröffentlichungstag der Anmeldung: 05.06.1996
(73) Patentinhaber: FILTERWERK MANN & HUMMEL GMBH, 71631 Ludwigsburg (DE)
(72) Erfinder: Bauer, Sascha, D-71549 Auenwald (DE)
(74) Vertreter: Voth, Gerhard, Dipl.-Ing.

(56) Entgegenhaltungen:
- EP-A- 0 681 094
- DE-A- 2 835 913
- DE-U- 9 312 856

## Beschreibung

Die Neuerung betrifft ein Flüssigkeitsfilter insbesondere für Öl oder Kraftstoff einer Brennkraftmaschine nach dem Oberbegriff des Hauptanspruchs.

Ein solches Flüssigkeitsfilter ist beispielsweise aus dem DE-GM 93 12 856.8 bekannt. Dieses Flüssigkeitsfilter weist in einem Filtergehäuse angeordnet einen austauschbaren Filtereinsatz auf. Der Filtereinsatz wird über einen Stützdom gesteckt, wobei der Stützdom mit einem Deckel des Filtergehäuses verbindbar ist. Der Stützdom dient zum einen für den Rücklauf des gereinigten Öls und besitzt deshalb im Kern eine Rücklaufbohrung, zum anderen dient er mit entsprechenden radial gerichteten Rippen zum Abstützen des austauschbaren Filtereinsatzes.

Bei diesem Stützdom wirken sich die kurzen unterbrochenen Rippen beim Aufschieben des Filtereinsatzes nachteilig aus. Beim Aufschieben stößt der Filtereinsatz gegen die radial gerichteten kurzen Rippen. Des weiteren wird nur eine kurze durchgehende Abstützung der Papierfalten erreicht und somit das Einknicken der Falten begünstigt.

Zur Beseitigung dieses Mangels wurde in einer weiteren Veröffentlichung ein Stützdom beschrieben, der keine Rippen aufweist, sondern eine durchgehende Wendel besitzt. Diese durchgehende Wendel ist an bestimmten Bereichen noch radial gerichtet bzw. abgeflacht, um eine bessere Entformbarkeit dieses Kunststoffteils zu erzielen.

Ein Nachteil dieses Stützdoms besteht jedoch darin, daß an den abgeflachten Teilflächen ein Filtereinsatz beim Aufschieben oder Abziehen anstößt, so daß das Handling erschwert wird und ferner die Gefahr besteht, daß bei einer unsachgemäßen Montage auch hier der Filtereinsatz zerstört wird.

Ein weiterer Nachteil dieser Gestaltung des Stützdomes ist darin zu sehen, daß gefiltertes Öl bzw. gefilterte Flüssigkeit einen relativ langen Weg bis zum Auslauf zurücklegen muß.

Der Erfindung liegt die Aufgabe zugrunde, die genannten Nachteile zu vermeiden und ein Flüssigkeitsfilter zu schaffen, bei dem sowohl ein schneller Rücklauf des gefilterten Mediums gewährleistet ist als auch eine Beschädigung des Filtereinsatzes bei der Montage oder Demontage vermieden sowie gleichzeitig eine optimale Abstützung des Filtereinsatzes erzielt wird.

Diese Aufgabe wird ausgehend von dem Oberbegriff des Hauptanspruchs durch dessen kennzeichnenden Merkmale gelöst.

Der wesentliche Vorteil der Erfindung liegt in der Schaffung eines Rücklaufkanals, welcher wenigstens zwei in einem Winkel zueinander versetzt angeordnete Stege aufweist. Diese Stege ähneln einer modifizierten Wendel, die eine sehr hohe Steigung besitzt und damit einen schnellen Rücklauf der gefilterten Flüssigkeit zuläßt. Außerdem sind die Stege an ihren Kontaktflächen aufgrund ihrer geometrischen Struktur durchbrochen, so daß ein Mischeffekt entsteht. Durch das Fehlen von geraden Flächen oder von Rippen wird das Aufschieben eines Filtereinsatzes wesentlich vereinfacht. Eine Beschädigung des Filtereinsatzes bei der Montage ist weitestgehend ausgeschlossen.

Gemäß einer Ausgestaltung der Erfindung umschließen die Stege ein im Kern angeordnetes Rohr. Dieses Rohr ist das Rücklaufrohr für das gesamte zu filternde Öl. Das Rohr kann zur weiteren Verbesserung der Rücklaufeigenschaften an den Stellen, an denen sich die Stege berühren, abgeflacht sein. Damit wird der Durchtrittsquerschnitt an diesen Berührungsstellen zusätzlich vergrößert. Selbstverständlich besteht auch die Möglichkeit, das Rohr oval zu gestalten. Auch diese Maßnahme dient dazu, den Durchtrittsquerschnitt zu optimieren.

Eine weitere Ausgestaltung der Erfindung sieht vor, die Stege mit einer gebogenen Form zu versehen. Aufgrund dieser gebogenen Form erhöht sich die Steigung des wendelartigen Aufbaus, so daß auch hier eine Erhöhung der Rückfließgeschwindigkeit eintritt.

In vorteilhafter Weise ist das Standrohr einstückig aus einem Spritzgieß-Kunststoffmaterial hergestellt. Die Anordnung der Stege bewirkt ein einfaches Entformen des Teils. Aufgrund der Stegstruktur kann die Teilung, das heißt der Abstand zwischen zwei Stegen sehr gering gehalten werden. Damit ist eine große wirksame Abstützfläche für den Filtereinsatz erzielbar.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Ausführungsbeispiele der Erfindung sind in den Zeichnungen dargestellt und werden im folgenden näher erläutert. Die Zeichnungen zeigen:
- Figur 1: einen Querschnitt eines Ölfilters für eine Brennkraftmaschine,
- Figur 2: Schnitt A-A der Figur 1.
- Figur 3: eine Variante der Befestigung eines Standrohrs.

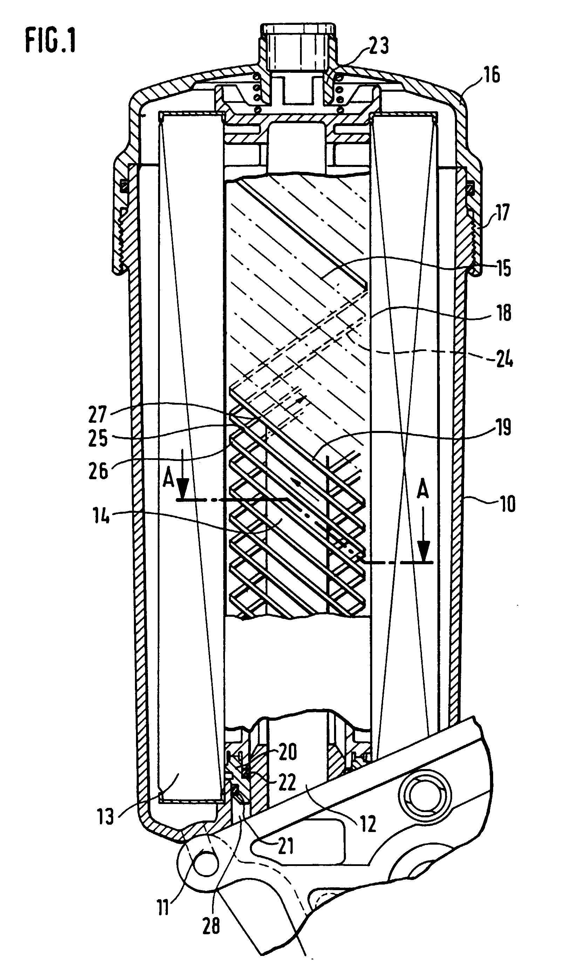

Der Querschnitt durch einen Ölfilter gemäß Figur 1 zeigt ein Filtergehäuse 10 mit einem Flüssigkeitszulaufkanal 11 sowie einem Flüssigkeitsrücklaufkanal 12. Über den Flüssigkeitszulaufkanal 11 gelangt die zu filternde Flüssigkeit an die Außenseite eines austauschbaren Filtereinsatzes 13, durchströmt diesen Filtereinsatz in radialer Richtung und wird über Rücklaufkanäle 14 nach oben geführt, stömt von dort in das innere des Rohres 15 und nach unten zum Flüssigkeitsrücklaufkanal 12. Das Filtergehäuse 10 ist mit einem Deckel 16 verschlossen. Die Befestigung des Deckels 16 an dem Filtergehäuse 11 erfolgt durch eine Schraubverbindung 17. Das Standrohr 18 mit dem Innenrohr 15 und den Stegen 19 ist einstückig aus Kunststoff hergestellt und weist am unteren Ende ein Dichtelement 20 mit zwei O-Ringen 21, 22 auf. Am oberen Ende ist das Standrohr über einen Verbindungsbereich 23 mit dem Deckel 16 verbunden. Die Stege 19, die an der Vorderseite sichtbar sind, berühren die Stege 24 der Rückseite an Verbindungspunkten 25, 26, 27, wobei hier nur wenige Verbindungspunkte gezeigt sind. Es ist ersichtlich, daß jeder Steg der Vorderseite mit dem Steg der Rückseite mehrere Verbindungspunkte aufweist. Zwischen den Verbindungspunkten sind die Rücklaufkanäle 14 offen, so daß das rücklaufende Öl ungehindert längs der, durch die Stege gebildeten Wendel nach oben fließen kann. Für den Austausch des Filtereinsatzes 13 wird der Deckel 16 aufgeschraubt. Über den Verbindungsbereich 23 nimmt der Deckel das Standrohr 18 mit und damit auch den Filtereinsatz 13. Gleichzeitig mit dem Öffnen des Deckels fließt das, in dem Filtergehäuse sich befindliche Öl nach unten über eine Ablaufbohrung 28 ab. Nach der Demontage des Deckels kann der Filtereinsatz 13 von dem Standrohr 18 abgezogen werden. Ein neuer Filtereinsatz läßt sich auf das Standrohr aufschieben.

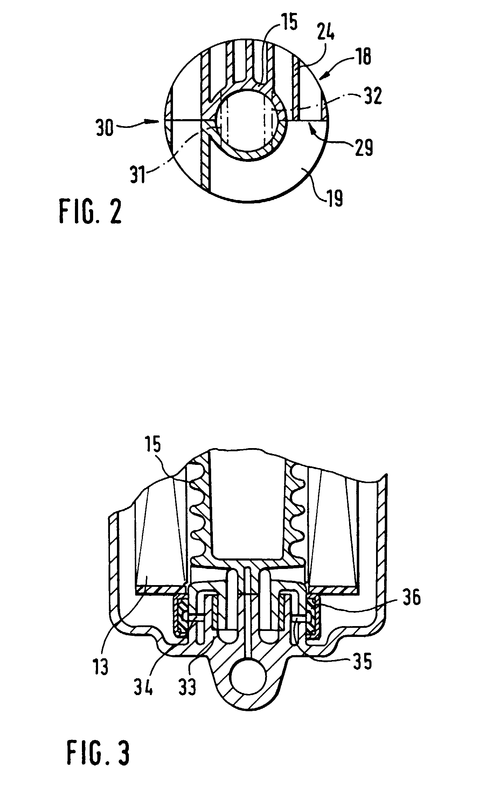

In Figur 2 ist eine Draufsicht auf das Standrohr gezeigt. Hier ist sehr deutlich der Verbindungsbereich 29, 30 zwischen den vorderen Stegen 19 und den rückseitigen Stegen 24 sichtbar. Dieser Verbindungsbereich stellt gleichzeitig die Trennebene der beiden Werkzeughälften für ein Spritzgießwerkzeug dar. Das in der Mitte des Standrohrs 18 befindliche Rohr 15 kann konzentrisch ausgeführt sein. Es besteht auch die Möglichkeit seitlich - wie gestrichelt dargestellt - Abflachungen 31, 32 vorzunehmen. Durch diese Abflachungen wird der Durchtrittsquerschnitt zwischen den beiden Steghälften 24, 19 vergrößert. Selbstverständlich besteht auch die Möglichkeit, anstelle der Abflachung ein ovales Rohr vorzusehen oder dem Rohr jede beliebige andere Form zu geben.

In einer Variante gemäß Figur 3 ist das Rohr 15 auf einem Anschlußstutzen 33 aufgesteckt. Zwischen Anschlußstutzen und Rohr bilden sich aufgrund von Ausnehmungen oder Abflachungen Ablaufkanäle 34, 35 aus, durch welche bei Entfernen des Filtereinsatzes 13 mit dem Abdichtelement 36 die im Filtergehäuse befindliche Flüssigkeit ablaufen kann.

## Patentansprüche

1. Flüssigkeitsfilter, insbesondere für Öl oder Kraftstoff einer Brennkraftmaschine, mit einem Filtergehäuse, wenigstens einem Flüssigkeitszulauf sowie einem Flüssigkeitsrücklaufkanal, einem das Filtergehäuse flüssigkeitsdicht verschließenden, lösbaren Deckel und einem aus dem Filtergehäuse entnehmbaren, einzeln austauschbaren Filtereinsatz, wobei innerhalb des Filtereinsatzes ein Standrohr angeordnet ist, welches wenigstens einen Rücklaufkanal aufweist, dadurch gekennzeichnet, daß der Rücklaufkanal (14) wenigstens zwei in einem Winkel zueinander versetzt angeordnete, sich an Verbindungspunkten ( 25, 26, 27 ) berührende und unter einem Winkel gegenüber der Axialrichtung geneigte Stege ( 19, 24 ) aufweist.

2. Flüssigkeitsfilter nach Anspruch 1, dadurch gekennzeichnet, daß die Stege (19, 24) diagonal gegenüberliegende Scheiben sind, die im Kern ein Rohr (15) umschließen.

3. Flüssigkeitsfilter nach Anspruch 2, dadurch gekennzeichnet, daß das Rohr (15) an den Bereichen an denen sich die Stege berühren, abgeflacht ist.

4. Flüssigkeitsfilter nach einem der vorherigen Ansprüche, dadurch gekennzeichnet, daß die Stege (19, 24) eine gebogene Form aufweisen.

5. Flüssigkeitsfilter nach einem der vorherigen Ansprüche, dadurch gekennzeichnet, daß das Standrohr (18) einstückig aus Kunststoff gefertigt ist.

6. Flüssigkeitsfilter nach einem der vorherigen Ansprüche, dadurch gekennzeichnet, daß die Stege (19, 24) eine Abstützung des Filtereinsatzes bewirken.

7. Flüssigkeitskeitsfilter nach einem der vorherigen Ansprüche, dadurch gekennzeichnet, daß das Rohr 15 im unteren Bereich des Filtergehäuses auf einen Befestigungsstutzen aufgesteckt ist, wobei durch Aussparungen oder Ausnehmungen zwischen Rohr und Stutzen Abflußöffnungen gebildet sind.

## Claims

1. Liquid filter, more especially for oil or fuel of an internal combustion engine, including a filter housing, at least one liquid inlet and one liquid return duct, a detachable cover which seals the filter housing in a liquid-tight manner, and an individually replaceable filter element which is removable from the filter housing, a upwardly extending pipe being disposed internally of the filter element and having at least one return duct, characterised in that the return duct (14) includes at least two webs (19, 24), which are disposed so as to be offset at an angle relative to each other and are inclined at an angle relative to the axial direction.

2. Liquid filter according to claim 1, characterised in that the webs (19, 24) are diagonally opposed discs which surround a pipe (15) in the core.

3. Liquid filter according to claim 2, characterised in that the pipe (15) is flattened at the regions where the webs meet.

4. Liquid filter according to one of the preceding claims, characterised in that the webs (19, 24) have an arcuate configuration.

5. Liquid filter according to one of the preceding claims, characterised in that the upwardly extending pipe (18) is integrally formed from plastics material.

6. Liquid filter according to one of the preceding claims, characterised in that the webs (19, 24) provide a support for the filter element.

7. Liquid filter according to one of the preceding claims, characterised in that the pipe (15) is placed upon a securing connection-piece in the lower region of the filter housing, discharge openings being formed by recesses or notches between pipe and connection-piece.

## Revendications

1. Filtre à liquide notamment filtre à huile ou à carburant pour un moteur à combustion interne, comprenant un boîtier de filtre, au moins une arrivée de liquide et un canal de retour de liquide, un couvercle amovible fermant de manière étanche au liquide le boîtier à filtre et une garniture de filtre remplaçable séparément, extractible du boîtier à filtre, un tube de soutien étant placé dans la garniture de filtre qui comporte au moins un canal de retour,
caractérisé en ce que
le canal de retour (14) comporte au moins deux entretoises (19, 24), montées de manière décalée suivant un angle et qui sont inclinées suivant un angle par rapport à la direction axiale.

2. Filtre à liquide selon la revendication 1,
caractérisé en ce que
les entretoises (19, 24) sont disposées en diagonale par rapport à des disques qui entourent un tube (15) prévu au milieu.

3. Filtre selon la revendication 2,
caractérisé en ce que
le tube (15) est aplati dans les zones où il touche les entretoises.

4. Filtre selon l'une quelconque des revendications,
caractérisé en ce que
les entretoises (19, 24) ont une forme courbe.

5. Filtre selon des revendications,
caractérisé en ce que
le tube de support (18) est fabriqué en une seule pièce en matière plastique.

6. Filtre selon l'une quelconque des revendications,
caractérisé en ce que
les entretoises (19, 24) assurent un support à la garniture de filtre.

7. Filtre selon l'une quelconque des revendications,
caractérisé en ce que
le tube (15) est engagé dans la zone inférieure du boîtier de filtre sur un embout de fixation et les orifices de passage de liquide sont formés par des découpes ou des enlèvements de matière entre le tube et l'embout.
